Europäisches Patentamt

(19) European Patent Office

Office européen des brevets

(11) Publication number: **0 075 927**

**B1**

(12) **EUROPEAN PATENT SPECIFICATION**

(45) Date of publication of patent specification: **28.10.87**

(21) Application number: **82108970.3**

(22) Date of filing: **28.09.82**

(51) Int. Cl.⁴: **B 62 M 9/12**

(54) **Bicycle derailleur.**

(30) Priority: **28.09.81 JP 153328/81**

(43) Date of publication of application:
**06.04.83 Bulletin 83/14**

(45) Publication of the grant of the patent:
**28.10.87 Bulletin 87/44**

(84) Designated Contracting States:
**DE FR GB IT**

(56) References cited:
**FR-A-1 271 911**
**GB-A- 601 744**
**GB-A-2 057 071**
**US-A-3 111 855**
**US-A-3 803 933**

(73) Proprietor: **MAEDA INDUSTRIES, LTD.**
**No. 1-16, 2-cho, Minami-koyo-cho**
**Sakai Osaka (JP)**

(72) Inventor: **Ozaki, Nobuo**
**No. 325, Higashi 3-cho Hamadera-suwanomori-cho**
**Sakai Osaka (JP)**

(74) Representative: **Frühbuss, Heinrich, Dr.rer.nat.**
**Hubert-Reissner-Strasse 5a**
**D-8032 Gräfelfing b. München (DE)**

## Description

This invention relates to a bicycle derailleur of the type as defined in the preamble of claim 1, and more particularly to an improved derailleur structure applicable to a rear derailleur which is used for selectively shifting a drive chain from one sprocket to another sprocket of a multi-speed freewheel comprising usually three to eight different sized sprockets. The structure is also applicable to a front derailleur which is used for shifting the chain from one gear to another gear of a multi-speed chain wheel comprising usually two to four different sized gears.

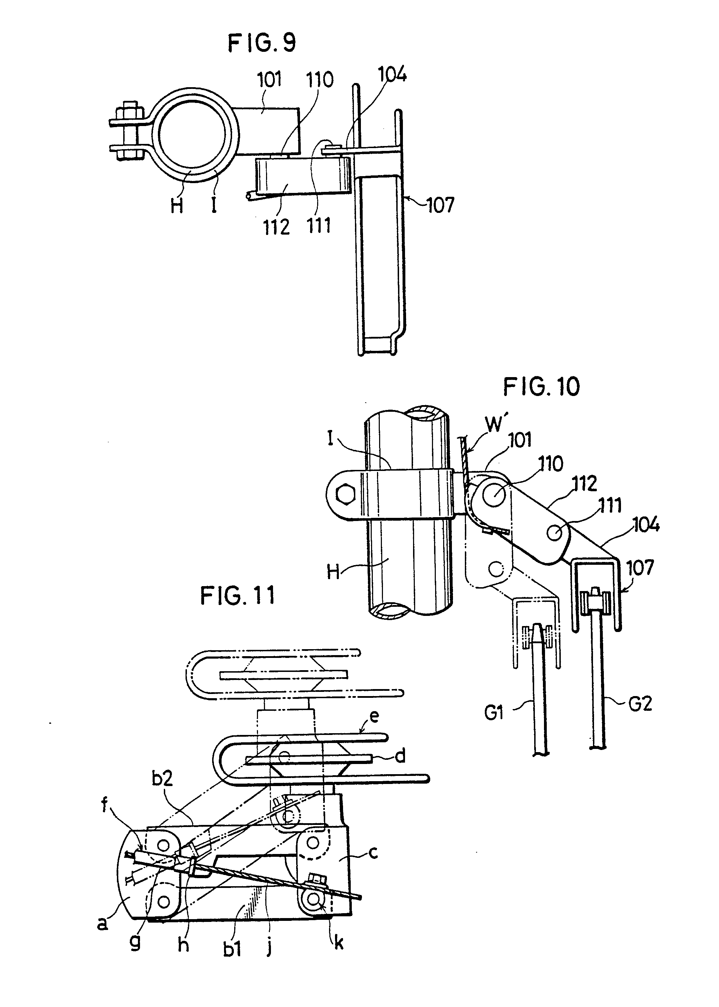

The conventional rear derailleurs, that are now actually available in the commercial markets, generally have a parallelogram linkage mechanism for guiding the drive chain over a plurality of freewheel sprockets which are spaced axially along the axis of the rear wheel hub as disclosed, for example, in US—A—3 803 933 to Huret et al, US—A—3 111 855 to Juy and FR—A—1 271 911 to Campagnolo. As is well known in the field and as illustrated in Figure 11 of the accompanying drawing, the typical parallelogram linkage mechanism of the prior art rear derailleur is formed by four links, that is, a stationary links (a) fixed to a mounting bracket (not shown) known as a rear end plate of a bicycle frame, a pair of spring-biased parallel links (b1) (b2) pivotally connected at their one end to the stationary links (a), and a movable link (c) which is opposite to the stationary link (a) and pivotally connected to the other end of the links (b1) (b2) to support a known tensioner (e) which, in turn, carries a guide roller (d) and a known tension roller (not shown). The parallelogram is resiliently transformable by operation of a known Bowden-type control cable (f), which consists of an outer tubular sheath (g) and an inner wire (j) passing through the former within a certain predetermined range, for example, from the solid line position to the phantom line position or vice versa as shown in Figure 11, so that the tensioner (e) carried by the movable link (c) can move with always maintaining parallel relation with respect to each of a plurality of sprockets of a multi-speed freewheel, to effect the desired chain shifting over the freewheel sprockets.

The conventional parallelogram type rear derailleur has the following disadvantages. The first is that the four link members (a) (b1) (b2) (c), cooperating coil springs (not shown in Figure 11), and other component elements are all exposed to rain and dust and naturally get rusty and dusty, which causes an obstacle to a desired smooth transformation of the parallelogram and a short span of life.

Another disadvantage is that the parallelogram linkage mechanism hinders a simple and compact design of the rear derailleur and therefore a good appearance of the derailleur cannot be attained.

A further disadvantage is that not a single or mono type control cable but an expensive double type control cable (f) known as a Bowden cable must be employed to transform the parallelogram linkage. More particularly, the parallelogram can be transformed by varying a length of its diagonals. For that purpose, one end (h) of the tubular sheath or outer cable (g) should be fixed, at a position near one extremity of one of the diagonals, to one of the parallel links (link (b2) in the case of Figure 11), while one end of the inner cable or wire (j) should be fixed, at a position near the other extremity of the diagonal, to a fixing member (k) provided on a pivot pin by means of which the movable link (c) and the other of the parallel links (link (b1) in the case of Figure 11) are pivotally connected together, so that the length of the diagonal can be varied by an axial sliding motion of the inner wire (j) relative to the outer cable or sheath (g). A less expensive single type control cable cannot be utilized for this purpose. Additionally, it is apparent that the single type control cable requires less force in operation than the double type control cable, because a certain frictional resistance is present in the axial sliding motion of the inner wire (j) relative to the outer cable (g).

An attempt to protect the component elements from dust and rain by the provision of a suitable swing casing has been proposed in GB—A—601 744 to Bane. However, this prior art casing is not capable of fully enclosing the inside elements because the derailleur has a pair of arms extending out of the casing but connected to the casing by a pair of pivot pins arranged within the casing. Naturally, it is necessary to provide a cutaway portion of a certain width at each of the opposite ends of the casing so that each of the arms can extend out of the casing and allow the casing to swing without the arms themselves rotating about the respective pivot pins. Thus, it is impossible to prevent dust and rain from coming into the casing through the cutaways.

It is, therefore, an object of the present invention provide an improved bicycle derailleur which permits complete protection of important component elements from rain and dust for a long span of life without maintenance while providing a very simple and attractive appearance.

According to the present invention, the above object is fulfilled by providing a bicycle derailleur which comprises a stationary member to be fixed to a bicycle frame, a first shaft integral with the stationary member, a swing member pivotally supported by the first shaft and having a substantially box-shaped hollow body into which the first shaft directly extends, a second shaft supported by the swing member rotatably relative thereto and extending in parallel with and spaced from the first shaft, a movable member non-rotatably mounted on and supported by the second shaft, and a restricting means for restricting the second shaft from rotating about its own axis during pivotal movement of the swing member about the first shaft, characterised in that the swing member is spring-biased and that all of the first shaft, the second shaft and the restricting means are housed within the hollow body of the swing member such that they are totally protected from exposure to the atmosphere.

Compared to the arrangement of GB—A—601 744, the box-shaped swing member defined above can totally protect its interior parts (first shaft, etc.) from exposure to the atmosphere and hence from rain and dust in addition to concealing these parts to give a simple and good appearance.

The invention will now be further described by way of example with reference to the accompanying drawings, in which:

Figure 1 is a perspective view of a rear derailleur, in operative position, according to the invention, with associated bicycle parts shown in phantom lines;

Figure 2 is a side elevation of Figure 1;

Figure 3 is a partial section showing the internal structure of a swing member of the derailleur;

Figure 4A is an exploded perspective view showing component elements of the derailleur;

Figure 4B is a view similar to Figure 4A, showing component elements in a modified embodiment;

Figures 5A, 6, 7A and 8A are schematic illustrations showing operation of the embodiment of Figure 4A;

Figures 5B, 7B and 8B are schematic illustrations showing operation of the embodiment of Figure 4B;

Figure 9 is a schematic top plan view of a front derailleur, in operative position, according to the invention;

Figure 10 is a side elevation of Figure 9; and

Figure 11 is a schematic top plan view showing a typical example of a parallelogram linkage employed in the prior art rear derailleurs.

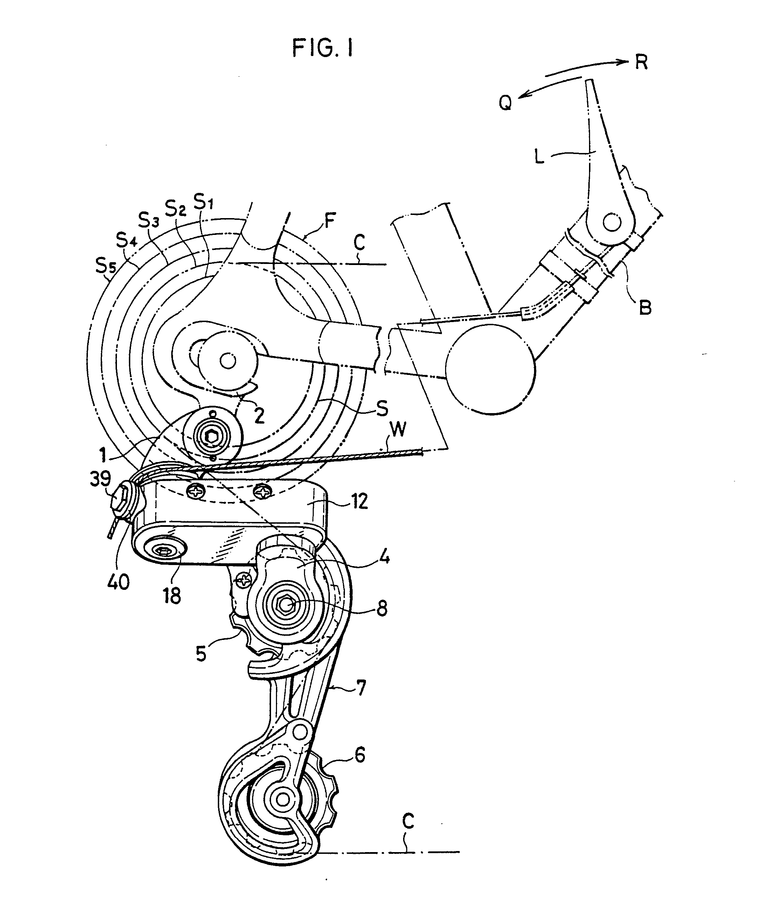

Referring now to the drawings, first in particular to Figures 1 to 8B showing a rear derailleur embodying the present invention, there is illustrated a derailleur structure comprising a stationary member 1 to be fixed to a known rear end plate 2 of a bicycle frame by means of appropriate known clamping members 37, 38, a box-shaped swing member 12 pivotally connected at one end to the stationary member 1, and a movable member 4 supported by the swing member 12 and supporting a known tensioner 8 which conventionally carries a guide roller 5 and a tension roller 6.

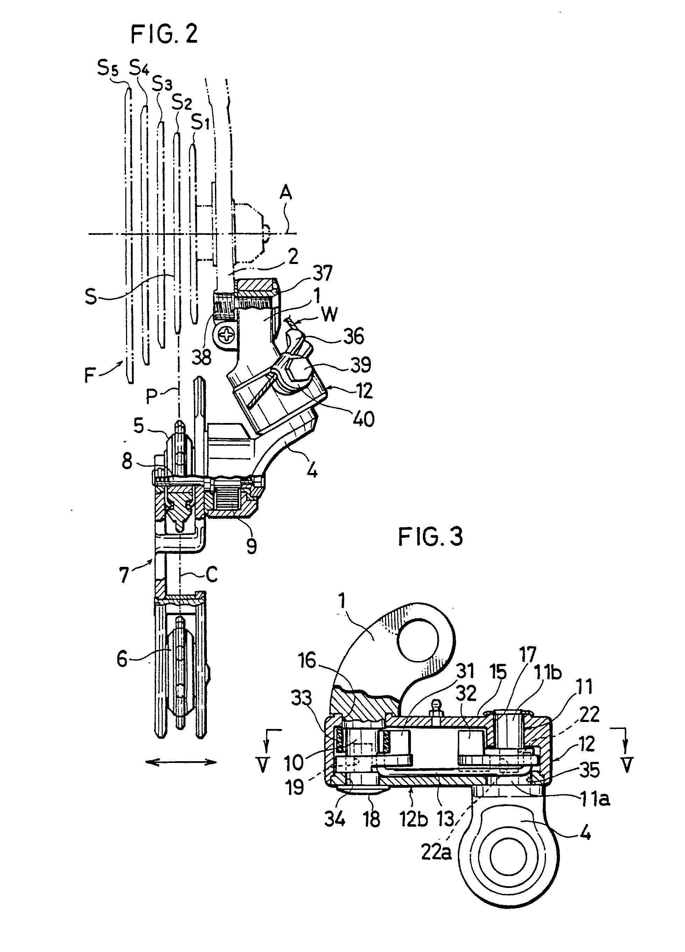

A drive chain C (shown in phantom line in Figure 1) runs in engagement with the rollers 5, 6 and one of a plurality of sprockets S1, S2, S3 ... Sn of a multi-speed freewheel F. The tensioner 7 may be conventionally mounted, for example, to a guide roller supporting shaft 8 for pivotal movement about the shaft 8, so as to maintain the chain C in proper tension. The tensioner 7 is resiliently urged to turn in one direction (clockwise direction in Figure 1) by means of a coil spring 9 disposed within the movable member 4, as shown in Figure 2.

As will be readily apparent from the illustration, the rear derailleur according to the present invention is conspicuously different in style from any of the conventional rear derailleurs, since many of the component elements can be concealed within the box-shaped swing member 12.

The stationary member 1 has a downwardly extending cylindrical extension serving as a stationary shaft 10, while the movable member 4 has an upwardly extending shaft 11 fixed thereto or formed integral therewith. The box-shaped swing member 12 is pivotally supported at one end by the stationary shaft 10. The shaft 11 of the movable member 4 extends upwardly through the free end portion of the swing member 12, in parallel relation with respect to the stationary shaft 10 and relatively rotatable relation with respect to the swing member 12. However, the shaft 11 should be restricted from rotating about its own axis by means of a suitable restricting means, in order that the tensioner 7 supported by the movable member 4 can move in parallel relation with respect to an axis A (Figure 2) of a bicycle rear wheel hub, so that a vertical plane P in which the guide and the tension rollers 5, 6 lie can be selectively positioned in the plane in which the selected one among the plurality of sprockets S1, S2, S3 ... Sn lies, as shown in Figure 2.

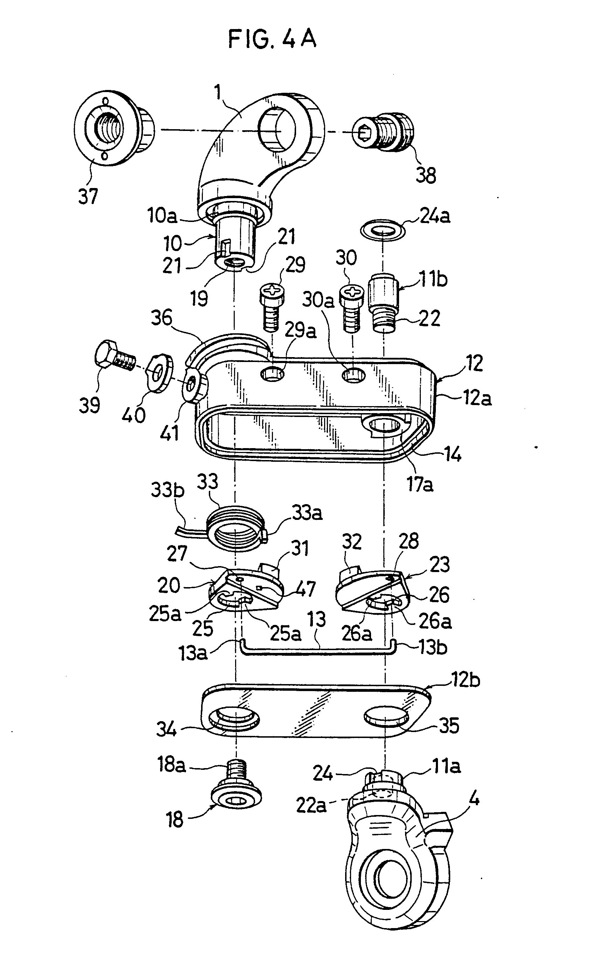

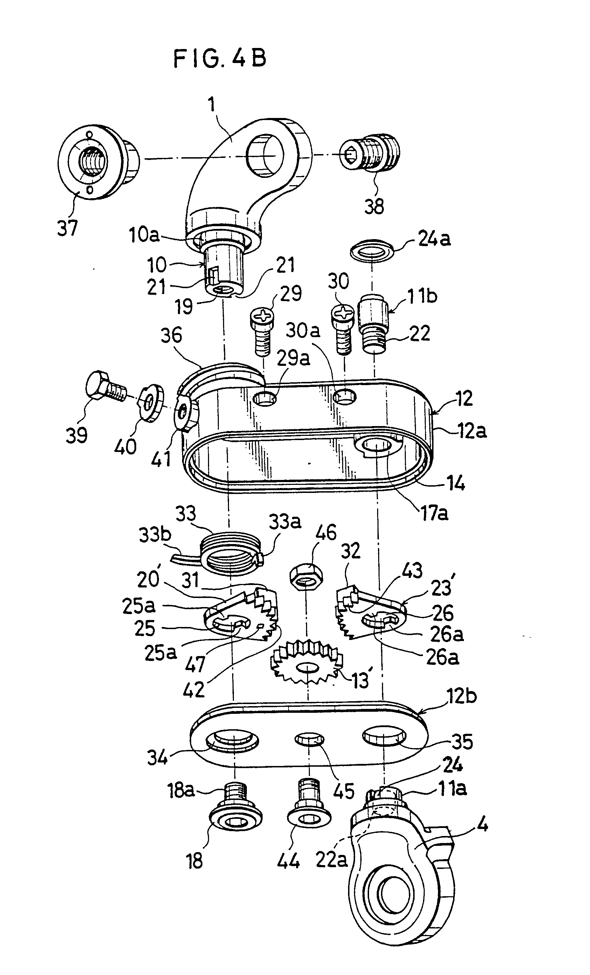

The restricting means may be realized in various ways. For example, it may be composed of a connecting bar 13 with an axial length equal to a distance between the shaft 10 and the shaft 11, and a pair of cooperating holed disks 20, 23, as best shown in Figure 4A. Or otherwise, the restricting means may be composed of a pinion 13' and a pair of cooperating holed, toothed disks 20', 23', as best shown in Figure 4B.

In the embodiment as illustrated in Figures 1 to 4A, the shafts 10, 11, the connecting bar 13 with a pair of upwardly extending hooked ends 13a, 13b, and the pair of disks 20, 23 are all housed within the box-shaped swing member 12 which comprises a hollow body 12a having a top wall 15 and an open bottom 14, and a cover plate 12b which closes the open bottom 14. As best shown in Figure 3, a cylindrical bore 16 is formed in one side of the top wall 15 for receiving a diametrically enlarged cylindrical base portion 10a of the shaft 10 therein so that the swing member 12 is rotatable about the cylindrical portion 10a. A further bore 17 is formed in the opposite side of the top wall 15 for rotatably receiving an upper shaft section 11b of the shaft 11. The wall which defines the bore 17 may be extended downwardly so as to form a sleeve 17a (Figure 4A) for supporting the shaft 11 in a more stable manner.

The shaft 10 has an internally threaded axial hole 19 formed in the free end section thereof for engagement with a clamping screw 18 whose threaded shaft 18a extends through a hole 34 formed in the cover plate 12b into engagement with the internal threads of the axial hole 19.

The first holed disk 20 of the restricting means is mounted by insertion on the free end section of the shaft 10 in such a manner that the disk 20 is not rotatable about the shaft 10. For this purpose, the shaft end may be, for example, formed with a pair of notches 21 while the disk 20 may be formed with a hole 25 into which a pair of small projections 25a project for engagement with the pair of notches 21, resulting in that the disk 20 is restricted from rotating about the shaft 10. The disk 20 has a small bore 27 formed therein for relatively movable engagement with one hooked end 13a of the connecting bar 13 for the purpose to be hereinafter described. The disk 20 is formed at its upper side with an upwardly extending small projection 31 which is preferably triangular in cross section and cooperates with an adjustable stopper bolt 29 extending through a supporting hole 29a formed in the box-shaped body 12a into engagement with the projection 31 for restricting a swing motion of the member 12 within an adjusted range.

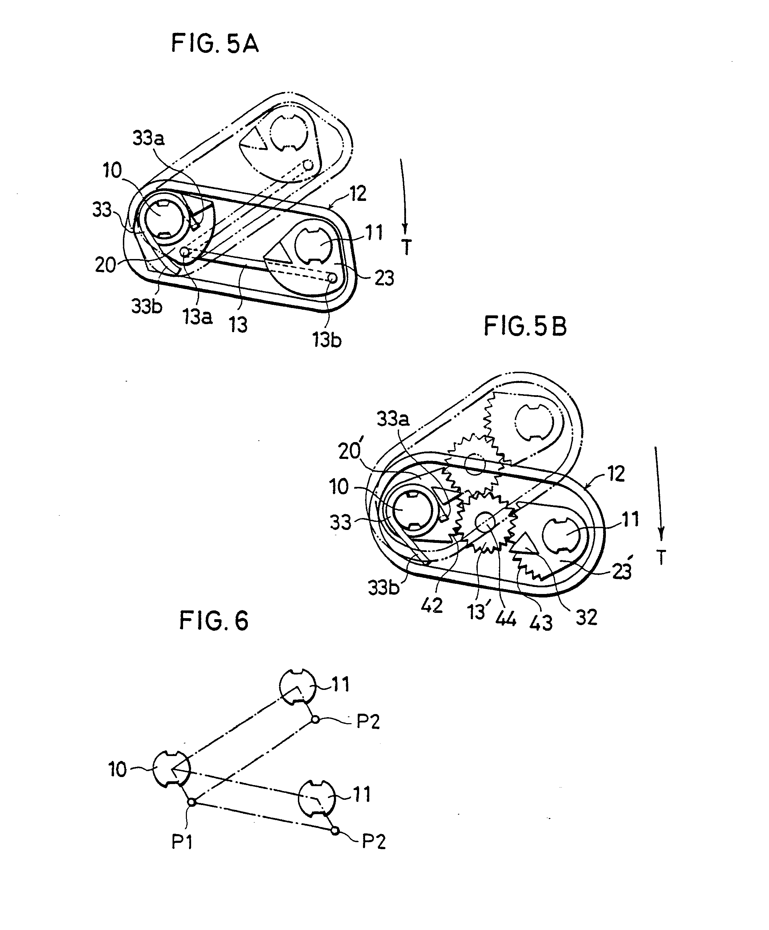

A coil spring 33 is mounted on the shaft 10 and disposed between the top wall 15 of the swing member 12 and the disk 20, with its one end 33a engaged with the disk 20 at a bore 47 formed therein and its other end 33b engaged with the internal wall of the swing member 12, so that the swing member 12 is spring-biased in the direction of an arrow T in Figure 5A, that is, the direction toward the top gear side of the freewheel F.

For the convenience of assembly, the shaft 11 of the movable member 4 may be of two-piece construction consisting of the first shaft section 11a which is integral with the movable member 4 and extends upwardly through a hole 35 formed in the cover plate 12b, and a base or second shaft section 11b which is connectable to the first shaft section 11a, as best shown in Figure 4A. More particularly, the first shaft section 11a has an internally threaded axial hole 22a, while the second shaft section has a reduced, threaded extension 22 which is engaged with the threaded axial hole 22a. When assembled, the shaft 11 is prevented from slipping out of the swing member 12 by means of a stop ring 24a conventionally fixed to the top end of the second shaft section 11b.

The second holed disk 23 of the restricting means is mounted on the first shaft section 11a in such a manner that the disk 23 is not rotatable about the shaft 11. For this purpose, the shaft section 11a may be, for example, formed with a pair of notches 24 (only one is shown in Figure 4A) while the holed disk 23 may be formed with a hole 26 into which a pair of small projections 26a project for engagement with the pair of notches 24, resulting in that the disk 23 is restricted from rotating about the shaft 11. The disk 23 has a small bore 28 formed therein for relatively movable engagement with the other hooked end 13b of the connecting bar 13. The disk 23 is formed at its upper side with an upwardly extending small projection 32 which is preferably triangular in cross section and cooperates with an adjustable stopper bolt 30 extending through a supporting hole 30a formed in the box-shaped body 12a into engagement with the projection 32 for restricting a swing motion of the member 12 within an adjusted range, under cooperation with the other stopper bolt 29 engageable with the other projection 31.

The distance between the pair of hooked ends 13a, 13b of the connecting bar 13 should be so determined as to be equal to the distance between the shafts 10 and 11.

A modified embodiment as illustrated in Figure 4B has a construction substantially same as that of the preceding embodiment already described in detail with reference to Figures 1 to 4A, except the restricting means adapted to restrict the shaft 11 of the movable member 4 from rotating about its own axis. Therefore, the detail description regarding the common construction or common component elements designated in Figure 4B by the identical reference numerals used in Figures 1 to 4A is omitted herein, and the description will be made in detail hereinafter, only with respect to the above-referred modified restricting means.

The modified restricting means as illustrated in Figure 4B includes a pinion 13' and a pair of holed, toothed disks 20', 23'. The pinion 13' is rotatably supported by a support shaft 34 extending through a hole 45 formed in the cover plate 12b into engagement with a nut 46 disposed within the box-shaped body 12a of the swing member 12. The disk 20' is fixed to the stationary shaft 10 while the other disk 23' is fixed to the first shaft section 11a of the movable member 4, in the same manner as described in the foregoing. The disk 20' has a toothed arcuate edge 42, while the other disk 23' has a similar toothed arcuate edge 43 with teeth of same pitch as those of the toothed edge 42. Both of the toothed edges 42, 43 are in mesh with the pinion 13' with the latter therebetween.

In operation, the stationary shaft 10 does not rotate since it is integral with the member 1 which is fixedly mounted to the bicycle frame. On the other hand, the swing member 12 is relatively rotatable with respect to both of the shafts 10, 11, and therefore, the swing member 12 moves about the shaft 10 when an external force is imparted to the swing member. However, the shaft 11 is restricted from rotating about its own axis by means of the restricting means, as described in detail in the foregoing.

More particularly, in the embodiment as illustrated in Figures 1 to 4A, the shaft 10 and the shaft 11 are linked with each other by means of the connecting bar 13 having an axial length equal to the distance between the shafts 10 and 11, at spaced two points P1, P2 each spaced apart from the shafts 10, 11 respectively, as shown in Figure 6. Accordingly, when the swing member 12 moves about the stationary shaft 10, the other shaft 11 moves along an arc of a circle defined by a radius equal to the distance between the shafts 10 and 11, without rotating about its own axis.

Also in the modified embodiment as illustrated in Figure 4B, when the swing member 12 moves about the stationary shaft 10, the other shaft 11 moves along an arc of a circle defined by a radius equal to the distance between the shafts 10 and 11, because the shafts 10, 11 are linked together by means of the pinion 13' meshed with both of the toothed disks 20', 23', as shown in Figures 4B, 5B, 7B and 8B.

Thus, in either of the embodiments as illustrated in Figures 4A and 4B, the tensioner 7 carried by the movable member 4, which is integral with the shaft 11, moves substantially axially along the axis A (Figure 2) of a bicycle rear wheel hub, with maintaining parallel relation with respect to the sprockets S1, S2, S3 ... Sn of the freewheel F.

Figures 9 and 10 illustrate a front derailleur embodying the present invention, which has a stationary member 101 fixed to a bicycle frame tube (seat tube) H by means of a known fixing band I. The stationary member 101 has a stationary shaft 110 formed integral therewith. A spring-biased swing member 112 is pivotally supported at its one end by the stationary shaft 110. A known chain guide 107 having a pair of spaced, parallel guide plates is fixedly connected to a movable member 104 supported by a shaft 111 which extends through the free end portion of the swing member 112 in parallel relation with respect to the stationary shaft 110 and in relatively rotatable relation with respect to the swing member 112. The shaft 111 is restricted from rotating about its own axis by means of a suitable restricting means. Consequently, when the swing member 112 pivotally moves about the stationary shaft 111, the shaft 111 moves along an arc of a circle defined by a radius equal to a distance between the shaft 110 and the shaft 111, without rotating about its own axis.

In the embodiment of Figures 9 and 10, the specific construction and arrangement of each of the shafts 110, 111, the restricting means, the swing member 112, and other essential elements may be substantially the same in principle as those employed in the preceding embodiments described in detail hereinbefore, and therefore, the detailed description thereof is omitted herein. It is believed that anyone skilled in the art can carry out the invention of Figures 9 and 10 in view of the invention of Figures 1 to 4B.

In operation, when a control cable W' is pulled or released, the swing member 112 is pivotally moved about the stationary shaft 110 from the solid line position to the phantom line position or vice versa, with the shaft 111 restricted from rotating about its own axis, as shown in Figures 9, 10, resulting in that the chain guide 107 supported by the shaft 111 by way of the member 104 can move laterally over the gears G1, G2 ... Gn of a multi-speed chain wheel, with maintaining the guide plates in parallel relation with respect to the side surfaces of the gears G1, G2 ... Gn of the chain wheel, to effect the chain-shifting over one selected gear of the chain wheel.

According to the present invention, it is possible to design the swing member 12/112 so as to be box-shaped for housing and concealing the shafts 10/110, 11/111, the restricting means, the coil spring 33, and other component elements therein, with the result that water, dust and the like are prevented from intrusion into the swing member 12/112. It is also possible to enclose grease or the like lubricant in the swing member 12/112 for smooth operation and better maintenance. As a result, the derailleur of the present invention can enjoy a longer span of life as compared with the conventional derailleur whose link members, springs and other component element are all exposed to rain and dust.

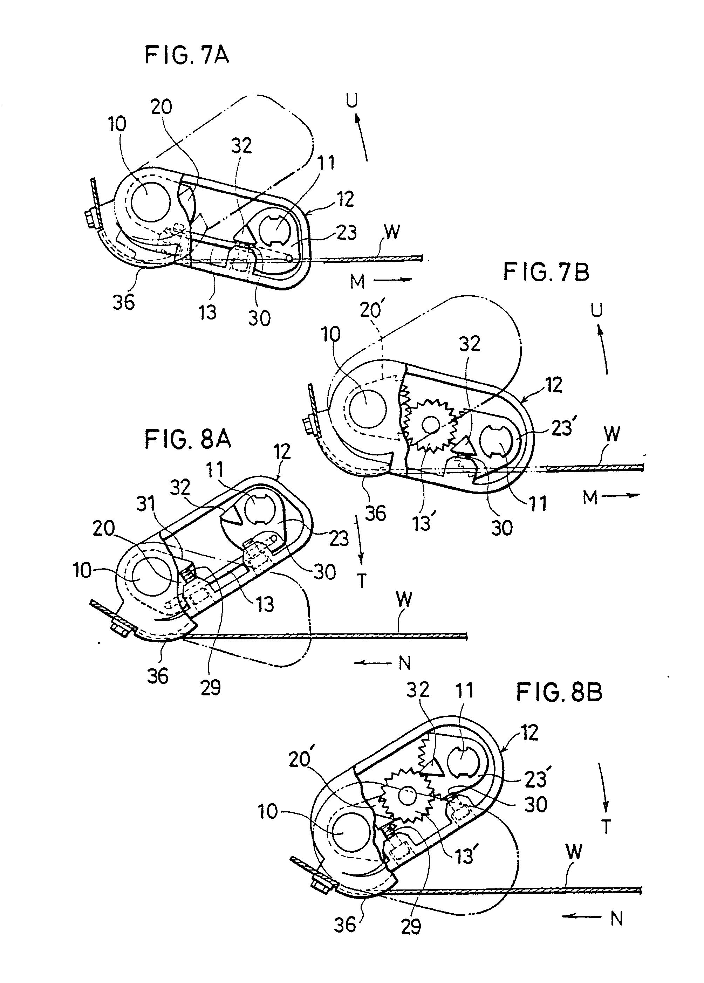

Further, according to the present invention, operation of the derailleur can be effected by means of a single type cable. Particularly with the conventional parallelogram type rear derailleur, the double type cable known as a Bowden cable, which consists of an outer sheath and an inner wire, is required in order to forcibly deform the parallelogram linkage. More particularly, as illustrated in Figure 1, a single type cable W is fixedly connected at its one end to a control lever L mounted on a bicycle frame tube (down tube) B and also fixedly connected to the other end thereof to the swing member 12 by means of known clamping members 39, 40, 41 (Figures 4A and 4B), preferably being guided by a suitable guide such as a reel portion 36 formed with the body 12a of the swing member, so that a direct connection between the lever L and the rear derailleur is provided. Since the swing member 12 is spring-biased by means of the coil spring 33 so as to turn in one direction (direction of the arrow T in Figures 8A and 8B), when the cable W is released in the direction of the arrow N by operation of the lever L in the direction of the arrow R, the swing member 12 moves from its solid line position to its phantom line position in Figures 8A and 8B. On the other hand, when the cable W is pulled in the direction of the arrow M by operation of the lever L in the direction of the arrow Q, the swing member 12 moves from its solid line position to its phantom line position in Figures 7A and 7B. In this way, the swing member 12 can pivotally move about the shaft 10 in the direction of the arrow T (Figures 8A, 8B) or alternatively in the direction of the arrow U (Figures 7A, 7B) by the simple operation of the control lever L, resulting in that the speed change operation can be effected in a very simple manner with less force as compared with the conventional device.

Further, according to the present invention, the angular range of pivotal movement of the swing member 12/112 can be easily adjusted by means of the stopper bolts, 29, 30. More particularly, as shown in Figures 7A and 7B, the pivotal movement of the swing member toward the top gear can be easily restricted within a desired angular range merely by adjustably screwing or unscrewing the top-gear side stopper bolt 30 whose forward end is in contact with projection 32 of the disk 23/23'. On the other hand, as shown in Figures 8A and 8B, the pivotal movement of the swing member toward the low gear can be easily restricted within a desired angular range merely by adjustably screwing or unscrewing the low-gear side stopper bolt 29 whose forward end is in contact with the projection 31 of the disk 20/20'.

The present invention being thus described, it will be obvious that same may be varied in many ways. For instance, the swing member 12/112 may be formed in various configuration and should not be limited to the illustrated box-shaped structure. If desired, the cover plate 12b may be omitted. It is possible to mount the coil spring 33 not on the shaft 10/110 but on the shaft 11/111. It is also possible to arrange the spring 33 so as to urge the swing member 12/12 not in the direction of the arrow T (Figures 5A, 5b) but in the direction of the arrow U (Figures 7A, 7B). The disks 20/20', 23/23' may be formed in various shapes, and the positions of the projections 31, 32 on those disks may be varied in many ways. As a matter of course, the cross section of the projections 31, 32 should not be limited to a triangular shape. The reel portion 36 may be omitted or replaced by another form of suitable guide means located in an appropriate place of a bicycle frame. Further, the restricting means for restricting the shaft 11/111 from rotating about its own axis may be achieved for example by an endless belt, chain or wire which is so designed as to be in engagement with both of the shafts 10/110, 11/111.

## Claims

1. A bicycle derailleur comprising a stationary member (1/101) to be fixed to a bicycle frame, a first shaft (10/110) integral with the stationary member, a swing member (12/112) pivotally supported by the first shaft and having a substantially box-shaped hollow body (12a) into which the first shaft directly extends, a second shaft (11/111) supported by the swing member rotatably relative thereto and extending in parallel with and spaced from the first shaft, a movable member (4/104) non-rotatably mounted on and supported by the second shaft, and a restricting means for restricting the second shaft from rotating about its own axis during pivotal movement of the swing member about the first shaft, characterised in that the swing member (12/112) is spring-biased and that all of the first shaft, the second shaft and the restricting means are housed within the hollow body of the swing member (12/112) such that they are totally protected from exposure to the atmosphere.

2. The derailleur according to Claim 1, characterised in that the hollow body (12a) is open at one side, and this open side is closed by a cover plate (12b).

3. The derailleur according to Claim 2, characterised in that the hollow body (12a) is open at its bottom side, and this open bottom side is closed by the cover plate (12b).

4. The derailleur according to any one of Claims 1 to 3, characterised in that the swing member is formed with a control cable guiding means (36).

5. The derailleur according to any one of Claims 1 to 4, characterised in that the swing member is provided with a control cable fixing means (39, 40, 41).

6. The derailleur according to Claim 1 or 2, characterised in that the restricting means comprises a connecting bar (13) whose one end (13a) is linked to the first shaft and whose other end (13b) is linked to the second shaft.

7. The derailleur according to Claim 1 or 2, characterised in that the restricting means comprises a first toothed disk (20') rigidly secured to the first shaft, a second toothed disk (23') rigidly secured to the second shaft, and a pinion (13') which is in mesh with both of the first and second disks.

8. The derailleur according to Claim 1 or 2, characterised in that the restricting means comprises an endless member which is in engagement with both of the first and second shafts.

9. The derailleur according to Claim 1, characterised in that an adjustable stopper means is provided for restricting the pivotal movement of the swing member about the first shaft.

10. The derailleur according to Claim 9, characterised in that the adjustable stopper means comprises a first stopper bolt (29) operatively supported by the swing member and acting upon the first shaft, and a second stopper bolt (30) operatively supported by the swing member and acting upon the second shaft.

11. The derailleur according to Claim 1, characterised in that the chain guide means is a tensioner (7) having a guide roller (5) and a tension roller (6), both of the rollers being rotatably supported by the tensioner.

12. The derailleur according to Claim 1, characterised in that the chain guide means is a chain guide (107) having a pair of spaced, parallel guide plates.

## Patentansprüche

1. Eine Fahrrad-Gangschaltung, bestehend aus einem feststehenden Element (1/101), das am Fahrradgestell befestigt wird, einer ersten, mit dem feststehenden Element verbundenen Welle (10/110), einen Schwenkelement (12/112), das über einen Drehzapfen mit der ersten Welle verbunden ist und einen im wesentlichen kastenförmigen Hohlkörper (12a) aufweist, in den die Welle direkt hineinragt, ferner aus einer zweiten Welle (11/111), die rotierend im Verhältnis zum Schwenkelement gelagert sowie parallel zu bzw. in einem gewissen Abstand von der ersten Welle angeordnet ist, weiterhin aus einem beweglichen Teil (4/104), das nichtrotierend auf der zweiten Welle montiert bzw. gelagert ist sowie aus einem Begrenzer, der die zweite Welle an der Rotation um ihre eigene Achse während der Drehbewegung des Schwenkelements um die erste Welle hindert, dadurch gekennzeichnet, dass das Schwenkelement (12/112) durch Federn beaufschlagt wird und die erste Welle, die zweite Welle sowie der Begrenzer im Hohlkörper des Schwenkelements (12/112) vollständig vor atmosphärischen Einwirkungen geschützt untergebracht sind.

2. Die Gangschaltung nach Anspruch 1, dadurch gekennzeichnet, dass der Hohlkörper (12a) an einer Seite offen ist und diese offene Seite durch eine Abdeckplatte (12b) verschlossen wird.

3. Die Gangschaltung nach Anspruch 2, dadurch gekennzeichnet, dass der Hohlkörper (12a) einen offenen Boden hat, der durch die Abdeckplatte (12b) verschlossen wird.

4. Die Gangschaltung nach einem der Ansprüche 1 bis 3, dadurch gekennzeichnet, dass das Schwenkelement mit einer FÜhrung (36) für das Steuerkabel ausgebildet ist.

5. Die Gangschaltung nach einem der Ansprüche 1 bis 4, dadurch gekennzeichnet, dass das Schwenkelement mit einer Befestigung (39, 40, 41) für das Steuerkabel ausgerüstet ist.

6. Die Gangschaltung nach Anspruch 1 oder 2, dadurch gekennzeichnet, dass der Begrenzer eine Verbindungsstange (13) aufweist, von der ein Ende (13a) mit der ersten Welle bzw. das andere Ende (13b) mit der zweiten Welle verbunden ist.

7. Die Gangschaltung nach Anspruch 1 oder 2, dadurch gekennzeichnet, dass der Begrenzer eine erste, starr mit der ersten Welle verbundene, gezahnte Scheibe (20') sowie eine starr mit der zweiten Welle verbundene gezahnte Scheibe (23') und ausserdem einen Drehzapfen (13') aufweist, der mit beiden Scheiben im Eingriff steht.

8. Die Gangschaltung nach Anspruch 1 oder 2, dadurch gekennzeichnet, dass der Begrenzer ein Endloselement aufweist, das mit beiden Wellen im Eingriff steht.

9. Die Gangschaltung nach Anspruch 1, dadurch gekennzeichnet, dass ein verstellbar Anschlag vorgesehen ist, der die Drehbewegung des Schwenkelements um die erste Welle einschrankt.

10. Die Gangschaltung nach Anspruch 9, dadurch gekennzeichnet, dass der verstellbare Anschlag einen ersten Anschlagbolzen (29) aufweist, der durch das Schwenkelement gehalten wird und auf die erste Welle einwirkt, sowie einen zweiten Anschlagbolzen (30), der durch das Schwenkelement gehalten wird und auf die zweite Welle einwirkt.

11. Die Gangschaltung nach Anspruch 1, dadurch gekennzeichnet, dass die Kettenführung aus einer Kettenspannvorrichtung (7) besteht, die eine Führungsrolle (5) und eine Spannrolle (6) aufweist, wobei beide Rollen drehbar auf der Spannvorrichtung verlagert sind.

12. Die Gangschaltung nach Anspruch 1, dadurch gekennzeichnet, dass die Kettenführung aus einer Führungsvorrichtung (107) besteht, die mit einem Paar paralleler, in einem gewissen Abstand voneinander angeordneter Führungslatten ausgestattet ist.

## Revendications

1. Dérailleur pour bicyclette comprenant un élément stationnaire (1/101) destiné à être fixé à un cadre de bicyclette, un premier arbre (10/110) solidaire de l'élément stationnaire, un élément orientable (12/112) supporté de façon pivotante par le premier arbre et formé d'un corps creux (12a) sensiblement en forme de carter dans lequel s'étend directement le premier arbre, un deuxième arbre (11/111) supporté par l'élément orientable, pivotant par rapport à celui-ci, et qui s'étend parallèlement à et écarté du premier arbre, un élément mobile (4/104) monté de façon non-rotative sur le deuxième arbre et supporté par ce dernier, ainsi qu'un dispositif de restriction pour empêcher le deuxième arbre de pivoter autour de son propre axe pendant le mouvement pivotant de l'élément orientable autour du premier arbre, caractérisé en ce que l'élément orientable (12/112) est soumis à l'action d'un ressort et en ce que l'ensemble formé du premier arbre, du deuxième arbre et du dispositif de restriction est incorporé dans le corps creux de l'élément orientable (12/112) d'une façon à être complètement protégé d'une exposition à l'atmosphère.

2. Le dérailleur suivant la revendication 1, caractérisé en ce que le corps creux (12a) est ouvert d'un côté et que celui-ci est fermé par une plaque couvercle (12b).

3. Le dérailleur suivant la revendication 2, caractérisé en ce que le corps creux (12a) est ouvert par le fond et que celui-ci est fermé par la plaque couvercle (12b).

4. Le dérailleur suivant les revendications 1 à 3, caractérisé en ce que l'élément orientable comprend un guidage (36) pour le câble de commande.

5. Le dérailleur suivant les revendications 1 à 4, caractérisé en ce que l'élément orientable est pourvu d'un moyen pour fixer une câble de commande (39, 40, 41).

6. Le dérailleur suivant les revendications 1 ou 2, caractérisé en ce que le dispositif de restriction comprend une barre de raccordement (13) dont une extrémité (13a) est liée au premier arbre tandis que l'autre extrémité (13b) est liée au deuxième arbre.

7. Le dérailleur suivant les revendications 1 ou 2, caractérisé en ce que le dispositif de restriction comprend un premier disque denté (20') fixé rigidement au premier arbre, un deuxième disque denté (23') fixé rigidement au deuxième arbre ainsi qu'un pignon (13') qui est en engrènement avec le premier et le deuxième disques.

8. Le dérailleur suivant les revendications 1 ou 2, caractérisé en ce que le dispositif de restriction comprend un élément sans fin qui est en engagement avec le premier et le deuxième arbres.

9. Le dérailleur suivant la revendication 1, caractérisé en ce qu'un dispositif de butée réglable est prévu pour restreindre le mouvement pivotant de l'élément orientable autour du premier arbre.

10. Le dérailleur suivant la revendication 9, caractérisé en ce que le dispositif de butée réglable comprend une première cheville de butée (29) par l'élément orientable et agissant sur le premier arbre, ainsi qu'une deuxième cheville de butée (30) supportée par l'élément orientable et agissant sur le deuxième arbre.

11. Le dérailleur suivant la revendication 1, caractérisé en ce que le guidage de chaîne est constitué d'un tendeur (7) muni d'un galet de guidage (5) et d'un galet tendeur (6), ces deux galets étant supportés de façon pivotante par le tendeur.

13        **0 075 927**        14

12. Le dérailleur suivant la revendication 1, caractérisé en ce que le dispositif de guidage de chaîne est constitué d'un guidage (107) muni d'une paire de plaques de guidage parallèles et écartées l'une de l'autre.

0 075 927

FIG. 1

0 075 927

FIG. 2

S₅ S₄ S₃ S₂ S₁

A

S

F

P

2

37

1

W

36

39

38

12

40

5

4

8

9

7

C

6

FIG. 3

1

16

31

15

17

11b

33

32

11

10

22

19

12

35

34   18   12b   13   11a

22a   4

V

V

2

## FIG. 4A

FIG. 4 B

FIG. 5A

FIG. 5 B

FIG. 6

FIG. 7A

FIG. 7B

FIG. 8A

FIG. 8B

# FIG. 9

101 110 104

H I

112 111

107

# FIG. 10

I

W′ 101 110 112 111

H

104

107

G1 G2

# FIG. 11

e

d

b2

f

c

a

g h b1 j k

7